# FASCICULE DE BREVET EUROPEEN

(11) **EP 0 424 185 B1**
(45) Date de publication et mention de la délivrance du brevet: **29.12.1993**
(21) Numéro de dépôt: 90401770.4
(22) Date de dépôt: 22.06.1990
(51) Int. Cl.: G01P 3/44

(54) **Roulement comportant un dispositif de détection de la vitesse**
Wälzlager mit Vorrichtung zur Bestimmung der Geschwindigkeit
Rollbearing with speed measuring device

(30) Priorité: 16.10.1989 US 422189
(43) Date de publication de la demande: 24.04.1991
(73) Titulaire: S.N.R. ROULEMENTS, 74010 Annecy Cédex (FR)
(72) Inventeur: Hilby, James A., Watertown, CT 06795 (US); Hajzler, Christian, F-74000 Annecy (FR); Alff, Denis, F-74000 Annecy (FR)
(74) Mandataire: Ernst-Schonberg, Michel

(56) Documents cités:
- EP-A- 0 395 892
- DE-A- 2 243 331
- DE-A- 3 041 334
- US-A- 4 090 099

## Description

La présente invention concerne un roulement comportant un dispositif de détection de la vitesse de rotation d'un arbre tournant conforme au préambule de la revendication. L'invention concerne les roulements dans lesquels le capteur est fixe et dans lesquels le codeur est monté sur la bague tournante. La présente invention convient tout particulièrement aux roulements de roue d'automobile.

A mesure que la concurrence s'accroît dans l'industrie automobile, on met davantage l'accent sur la réduction de la consommation de carburant et l'abaissement des coûts de main-d'oeuvre. On modifie les roulements de roue pour en réduire le coût, les dimensions et le poids et pour augmenter les fonctions. Le progrès des systèmes de suspension et des systèmes de freinage à antiblocage entraîne une étude plus poussée des roulements de roue.

L'état de la technique concerne des dispositifs comprenant un capteur et un codeur incorporés à un roulement destiné aux roues de véhicules automobiles. Un exemple de cet état de la technique est connu par le brevet US-A-4 795 278. L'état de la technique décrit aussi l'incorporation de capteurs aux joints d'étanchéité du roulement. Un exemple d'application est décrit dans le brevet US-A-3 772 549.

Le brevet US-A-4 667 156 décrit un codeur denté et plusieurs modes de montage du codeur sur une bague de roulement.

La publication EP-A-0 395 892 décrit un roulement dont les bagues supportent un détecteur d'impulsions et un élément codeur respectivement associés à des brides radiales réalisées sur lesdites bagues du roulement. Ce type de roulement nécessite une bague intermédiaire d'ajustage de la position correcte du capteur par rapport à l'élément codeur.

La publication US-A-4 783 180 décrit un roulement comportant un dispositif de détection dont l'élément codeur est formé sur un élément annulaire monté sur la bague intérieure du roulement dans le but d'améliorer l'étanchéité du roulement.

Le principal problème lié à l'état de la technique est que l'adjonction d'un capteur et d'un codeur s'effectue aux dépens d'autres éléments. Ainsi, par exemple, certaines réalisations exigent un allongement axial du roulement par rapport au roulement sans capteur de vitesse. D'autres configurations du roulement avec capteur et codeur exigent des méthodes d'assemblage relativement complexes, qui ont tendance à augmenter les coûts de ces roulements. Certains montages nécessitent un ajustement précis de la position du capteur par rapport au codeur, pour assurer la délivrance d'un signal de vitesse approprié.

Le roulement, selon la présent invention, comporte une bague fixe et une bague tournante munies d'une bride radiale orientée vers l'extérieur, une bague tournante munie d'une bride radiale orientée vers l'extérieur, un capteur monté sur la bague fixe et un codeur monté sur la bague tournante. L'espace axial entre les deux brides est utilisé aussi efficacement que possible.

Cette proposition trouve sa solution dans la caractéristique de la revendication.

Pour mieux comprendre la présente invention, on se reportera aux dessins et à la description détaillée ci-après:
- la figure 1 est une vue en coupe d'un roulement comportant un capteur sur un collier de fixation monté sur la bride de la bague extérieure, et un codeur décalé radialement par rapport au capteur et monté sur un second collier fixé à la bride de la bague intérieure,
- la figure 2 est une vue en coupe d'une variante de réalisation du roulement illustré sur la figure 1,
- la figure 3 est une vue en coupe d'une variante de réalisation du dispositif de montage du codeur et du capteur.

Dans ce qui suit, les éléments communs aux différentes figures et dispositifs sont repérés par les mêmes chiffres. Par ailleurs, on désignera par le terme capteur tout système de détection comportant au moins un capteur.

On désignera, dans ce qui suit par le terme codeur, un codeur qui peut revêtir différentes formes lorsque le capteur utilise un détecteur à réluctance variable, le codeur sera une roue phonique. Si le capteur utilise un détecteur à effet Hall, le codeur pourra être de type annulaire lisse avec des pôles magnétisés nord et sud alternés.

De même, le capteur peut revêtir plusieurs formes. Le terme "capteur" désignera donc un exemple de configuration possible tout au long de la description.

Le roulement 212 comporte notamment une bague extérieure fixe 220, une bague intérieure tournante 230, plusieurs organes de roulement 40 dans une cage 44 et des joints 70 et 72. La bague intérieure 30 est constituée de deux éléments : un élément extérieur 32 et un élément intérieur 234. Cette configuration facilite la mise en place des billes 40 dans le roulement.

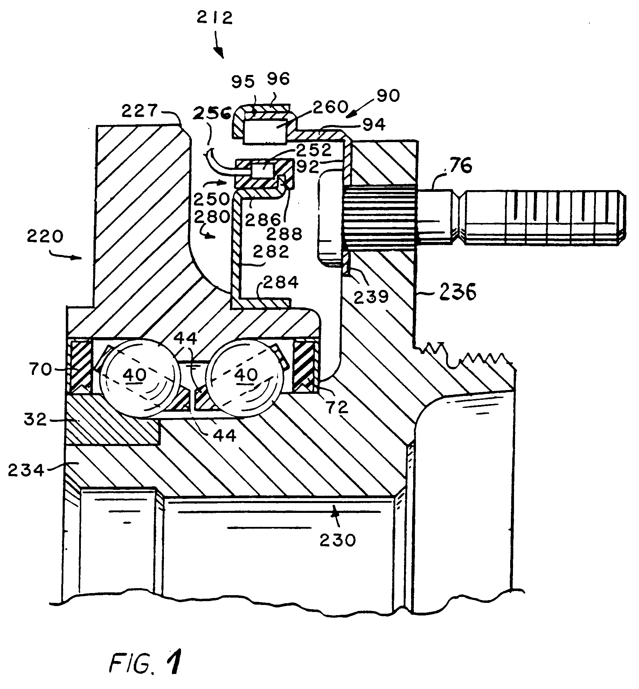

Le roulement 212 représenté à la figure 1 comporte un capteur 250 monté sur une première bague support 280 dont une partie radiale 282 raccorde deux parties axiales concentriques 284 et 286. La partie intérieure 284 est montée à force sur la surface extérieure de la bague extérieure 220, de manière à fixer la bague support 280 au roulement 212.

La partie axiale extérieure 286 comporte une bride radiale 288 de maintien du capteur 250 dans la bonne position radiale concentrique, par rapport au codeur 260. Une seconde bague support 90, montée sur une bride 236 de la bague intérieure 230, comporte une partie radiale 92 et une partie axiale 94. Le codeur 260 est maintenu en place dans une proéminence extérieure 95 de la partie 94 et un élément concave 96 est recourbé autour de la surface périphérique extérieure de la proéminence 95, de manière à enfermer le codeur 260. La partie radiale 92 de la bague support 90 comporte plusieurs trous de réception de goujons 76 qui maintiennent en place la bague support 90 sur la bride 236 et assurent la fixation de la roue. Un évidement 239 de la bride 236 permet un positionnement radial de la bague support 90. Un chanfrein 227 de la surface extérieure de la bride 226 contribue à réduire au minimum l'usure du câble de sortie 256 du capteur 250.

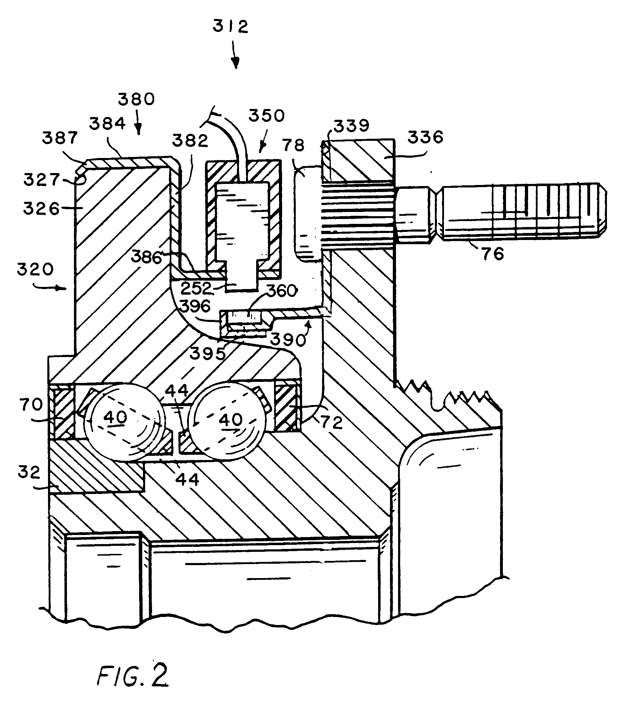

Le roulement 312 représenté à la figure 2, comporte les mêmes éléments de base que le roulement représenté à la figure 1. La différence entre les configurations illustrées sur les figures 1 et 2 concerne les bagues support du codeur et du capteur. Sur la figure 1, la bague support 90 est extérieure et orientée de manière à positionner le codeur 260 radialement à l'extérieur du capteur 250. Sur la figure 2, la deuxième bague support 390 maintient le codeur 360 dans le sens radial à l'intérieur par rapport au capteur 350. La figure 2 illustre un mode de fixation analogue de la bague support 390 à la bride 336, utilisant les têtes 78 des goujons 76 et, si nécessaire, un évidement 339 pour positionner de façon sûre la bague 390 par rapport à la bride 336. La première bague support 380 comporte une partie radiale 382 qui raccorde une partie axiale intérieure 386 à une partie axiale extérieure 384. La partie 384 comporte un rebord intérieur 387, recourbé sur le chanfrein 327 de la bride 326.

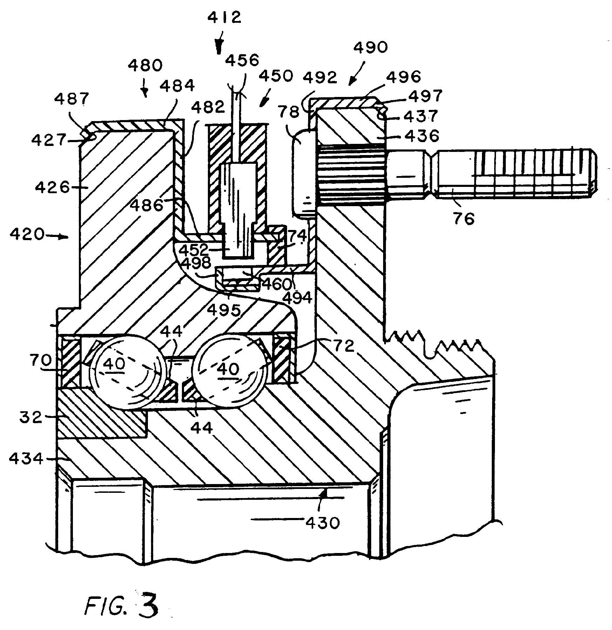

Si l'on se reporte à présent à la figure 3, le roulement 412 illustré est analogue au roulement 312 de la figure 2. La principale différence tient à l'adjonction d'un joint 74 d'étanchéité et d'isolation du capteur et du codeur. La forme de la seconde bague support 490 est modifiée. La première bague support 480 assure la fixation du capteur 450 et comporte une partie radiale 482, qui se raccorde à une partie axiale intérieure 486 et à une partie axiale extérieure 484. La seconde bague support 490 comporte une partie radiale 492 qui se raccorde à une partie axiale intérieure 494 et à une partie axiale extérieure 496.

La partie 494 comporte une proéminence 495 orientée vers l'intérieur dans le sens radial, qui maintient le codeur 460, avec l'aide d'un support concave 498, de manière analogue au maintien en place du codeur 360 illustré sur la figure 2. La partie extérieure axiale 496 est recourbée sur la surface périphérique extérieure de la bride 436 et comporte un rebord axial extérieur 497 recourbé sur le chanfrein 437 de la bride 436. Le joint 74 est fixé à l'extrémité extérieure de la partie 486 de la première bague support 480. La partie 486 chevauche suffisamment, dans le sens axial, la partie axiale intérieure 494 de la seconde bague support 490 pour permettre au joint 74 de dépasser à l'intérieur dans le sens radial et d'être en contact glissant avec la surface périphérique extérieure de la partie 494. La seconde bague de support 490 est maintenue en place par la partie 498. On pourra utiliser les têtes 78 des goujons 76 pour maintenir en place la bague 490, ou en tant que fixation supplémentaire.

## Revendications

1. Roulement comportant un dispositif de détection de la vitesse dans lequel les bagues intérieure et extérieure portent respectivement une bride radiale et dans lequel un capteur à détecteur est solidarisé avec la première bague et un codeur est solidarisé avec la deuxième bague caractérisé par le fait que le capteur (250, 350, 450) est fixé à la première bride (220, 320, 420) par l'intermédiaire d'un support (280, 380, 480) aligné sur le codeur (260, 360, 460) porté par la deuxième bride (236, 336, 436) de manière à délivrer un signal de sortie proportionnel à la vitesse de rotation de la deuxième bague par rapport à la première et que le codeur (260, 360, 460) est disposé concentriquement au capteur (250, 350, 450) dans une position radiale.

2. Roulement selon la revendication 1, caractérisé par le fait qu'une bague support (90, 390, 490) possède une première partie radiale (92, 392, 492) et une première partie axiale (94, 394, 494) comportant une proéminence (95, 395, 495) de maintien du codeur (260, 360, 460), ce dernier étant maintenu par un élément concave (96, 396, 498) recourbé sur la protubérance de la première partie axiale (94, 394, 494) de la bague support.

3. Roulement selon la revendication 2, caractérisé par le fait que la bague support (490) comporte une deuxième partie axiale (496), la première partie radiale (492) et la deuxième partie axiale (496) étant fixées à la surface extérieure de la deuxième bride (436).

## Patentansprüche

1. Wälzlager mit einer Vorrichtung zur Geschwindigkeitsmessung, wobei die Innen- und Außenringe jeweils einen Radialflansch aufweisen und wobei ein Meßfühler fest mit dem ersten Ring verbunden ist und ein Kodierer fest mit dem zweiten Ring verbunden ist, dadurch gekennzeichnet, daß der Fühler (250, 350, 450) am ersten Flansch (220, 320, 420) befestigt ist mittels einer Halterung (280, 380, 480), die zum Kodierer (260, 360, 460) ausgerichtet ist, der am zweiten Flansch (236, 336, 436) derart angeordnet ist, daß ein Ausgangssignal abgegeben wird, das proportional ist zur Rotationsgeschwindigkeit des zweiten Ringes bezüglich des ersten Ringes und daß der Kodierer (260, 360, 460) konzentrisch zum Fühler (250, 350, 450) in einer Radialposition angeordnet ist.

2. Wälzlager nach Anspruch 1, dadurch gekennzeichnet, daß ein Haltering (90, 390, 490) einen ersten radialen Abschnitt (92, 392, 492) und einen zweiten axialen Abschnitt (94, 394, 494) aufweist, mit einer Aussparung (95, 395, 495) zur Aufnahme des Kodierers (260, 360, 460), wobei letzere durch ein konkaves gerkrümmtes Bauteil (96, 396, 498) am Vorsprung des ersten axialen Abschnitts (94, 394, 494) des Halteringes gehalten wird.

3. Wälzlager nach Anspruch 2, dadurch gekennzeichnet, daß der Haltering (490) einen zweiten axialen Abschnitt (496) aufweist, wobei der erste radiale Abschnitt (492) und der zweite axiale Abschnitt (496) an der Außenfläche des zweiten Flansches (436) befestigt sind.

## Claims

1. A rolling bearing comprising a speed detecting device, in which the inner and outer rings respectively carry a radial flange and in which a detecting sensor is fixed to the first ring while a coder is fixed to the second ring, characterised in that the sensor (250, 350, 450) is fixed to the first flange (220, 320, 420) by means of a support (280, 380, 480) aligned on the coder (260, 360, 460) carried by the second flange (236, 336, 436) in such a way as to deliver an output signal proportional to the rotary speed of the second ring in relation to the first and in that the coder (260, 360, 460) is concentrically disposed in relation to the sensor (250, 350, 450) in a radial position.

2. A rolling bearing according to Claim 1, characterised in that a support ring (90, 390, 490) comprises a first radial part (92, 392, 492) and a first axial part (94, 394, 494) comprising a protuberance (95, 395, 495) for supporting the coder (260, 360, 460), this latter being held by a concave element (96, 396, 498) curved over the protuberance on the first axial part (94, 394, 494) of the support ring.

3. A rolling bearing according to Claim 2, characterised in that the support ring (490) comprises a second axial part (496), the first radial part (492) and the second axial part (496) being fixed to the outer surface of the second flange (436).
